# EUROPEAN PATENT APPLICATION

(11) **EP 1 646 205 A1**
(43) Date of publication of application: **12.04.2006**
(21) Application number: 04024017.8
(22) Date of filing: 08.10.2004
(51) Int. Cl.: H04L 29/08

(54) **Method for establishing communication between peer-groups**

(71) Applicant: DEUTSCHE THOMSON-BRANDT GMBH, 78048 Villingen-Schwenningen (DE)
(72) Inventor: Kubsch, Stefan, 31559 Hohnhorst (DE); Blawat, Meinolf, 30659 Hannover (DE); Klausberger, Wolfgang, 30519 Hannover (DE); Li, Hul, 30419 Hannover (DE); Hepper, Dietmar, 30419 Hannover (DE)
(74) Representative: Rittner, Karsten

(57) **Abstract**

Current peer-to-peer (P2P) systems are well defined for messaging and collaboration of peers running the same proprietary software and protocols, e.g. Kazaa or EDonkey. The generic framework JXTA for P2P computing provides various peer-group mechanisms and may address different applications, but provides no convenient method for exchanging messages between different peer-groups. The invention discloses a bridging concept and a delegate concept to establish communication between a first and a second peer-group (OZ1,OZ2), including the steps of a first peer being either a member (Node_ID3) of the first peer-group (OZ1) or a secondary peer (H) relating to a primary peer (G), wherein the primary peer (G) is a member of the first peer-group (OZ1), sending a message to the second peer-group (OZ2); a second peer (Node_ID2) being a member of the second peer-group (OZ2) receiving said message, detecting credentials of first peer and first peer-group (OZ1), and detecting whether a connection is allowed; and if so, granting the first peer (Node_ID3,H) membership with the second peer-group (OZ2).

## Description

### Field of the invention

This invention relates to a method for establishing communication between different peer-groups.

### Background

Current peer-to-peer (P2P) systems are well defined for messaging and collaboration of peers running the same proprietary software and protocols. Examples of those applications are Kazaa or EDonkey. Peers differ from usual computers in server-client architectures in that they do not require a server.
The international patent application WO 02/057917 discloses a P2P network computing platform known as JXTA, which is a generic framework for peer-to-peer computing, intended for addressing different applications using the same framework. E.g. one peer-group could be a file-sharing group while another group offers a Voice-over-IP service. JXTA uses a peer membership protocol, which allows a peer to apply for membership and receive a membership credential along with a full group advertisement. Messages between peers include one or more credentials used to identify the sender to the receiver. Peers have individual identifiers, e.g. UUID. A credential is a digital document that is bound to an individual, e.g. a peer, and that is verified in an authentication process when presented to another individual. The process of implementing a P2P platform element, e.g. binding, service or group membership is called instantiation, and the implementation is called an instance of the element.

The European Patent application EP1427141 uses the concept of peer-groups to implement the OwnerZone concept, where a peer-group represents a home network of devices in a users home. This concept also allows interconnection and communication between individual home networks, e.g. of users who trust each other: the user of an OwnerZone and the user of another Ownerzone can define mutually a certain level of trust towards each other, so that the OwnerZones are then regarded as "Trusted Zones" to each other and may more or less freely share contents or services. There is however no detailed method known for building up a connection between different peer-groups, in particular a temporary connection between Trusted Zones.

One principle of JXTA is that peers may exchange messages within a peer-group, but not across peer-groups. This is a good solution for internet based P2P applications, where peer-groups may comprise a huge number of peers: E.g. JXTA is designed to scale up to hundreds of thousands of peers, with multiple peer-groups existing in parallel. In a home network that may be connected e.g. to the Internet, this circumstance is of great disadvantage.

### Summary of the Invention

The present invention provides a method and device for establishing communication between two peer-groups, and in particular between two OwnerZones that have a "Trusted Zone" status to each other.

The invention comprises that a first peer, which is either a member of a first peer-group or has a close relationship, e.g. separate one-to-one connection, to another peer which is a member of the first peer-group, contacts a second peer-group and applies for temporary membership in this second peer-group. For the latter case, two peers may be e.g. separate software instances on a common hardware, so that they may communicate with each other via a separate channel, or two distinct peers that make a pair by using a special protocol or encryption that is not known to other peers. The control or service functions of the second peer-group detect that the first peer applies only for a temporary membership in the group, and that either the peer itself or another peer having a close relationship with it is a member of the first peer-group, and that it is intending to build up a connection to the first peer-group as either a bridge head or a delegate. This information can be contained in advertisement messages that the first peer sends. Further, the second peer-group maintains a list of peer-groups to which a contact is allowed, and optionally which degree of contact is allowed. The second peer-group checks if the first peer-group is contained in this list, and if this is the case, then it grants group membership to the first peer. Thus, it allows the first peer to send data or provide services from the second peer-group to the first peer-group.

The data and services in the second peer-group may be classified, and which particular data and services may be provided to the first peer-group depends on the above-mentioned allowed degree of contact. If the first peer-group is not contained in the list of peer-groups, the first peer may be rejected and/or the user or the administrator of the second peer-group may be prompted to decide whether the first peer-group shall be added to the list or not. Equivalently, a peer-group may maintain a negative list where peer-groups are contained with which no contact is allowed.

Two different implementation embodiments for Trusted Zone communication according to the invention are proposed: Trusted Zone Communication using a JXTA to JXTA bridge, and Trusted Zone Communication using a Delegate Node.

Advantageous embodiments of the invention are disclosed in the dependent claims, the following description and the figures.

### Brief description of the drawings

Exemplary embodiments of the invention are described with reference to the accompanying drawings, which show in
Fig.1 bridging between two OwnerZones;
Fig.2 bridging between multiple OwnerZones;
Fig.3-5 creation of a pipe connection between two peer-groups using a delegate peer.

### Detailed description of the invention

Two main embodiments of the invention for trusted zone communication are disclosed: the bridging concept and the delegate concept.

### 1. Trusted Zone Communication using a JXTA to JXTA bridge

Two different types of bridging services can be set-up: The first is a one-to-one connection between two OwnerZones. This allows e.g. a person to connect to his friend's home network and exchange content with him. The second type is a connection to a peer-group that works as a collaboration platform for OwnerZones. This solution uses a dedicated peer-group that is specialized just for "Trusted Zone" communication.

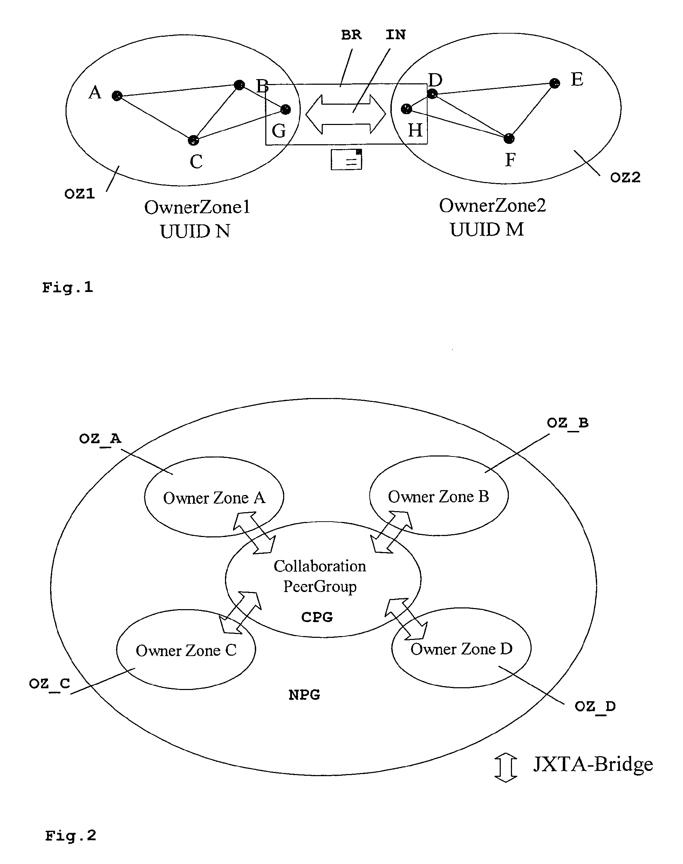

Fig.1 shows an example for a one-to-one bridge solution, where a bridging peer BR uses a primary address G to join its OwnerZone OZ1, i.e. a bridging peer belongs to a first OwnerZone. As a member of the OwnerZone OZ1, the peer publishes its bridging service to the other peers within the OwnerZone. Any of them may then request a Trusted Zone connection. Further, such Trusted Zone connection can also be pre-configured by an application. When the bridging peer is instructed to carry out a Trusted Zone connection, the secondary peer entity is "exported", i.e. instantiated in the "NetPeerGroup", which is the default base peer-group of applications. The secondary peer acquires the necessary peer-group information about the NetPeerGroup and the other present peer-groups, and contacts the targeted Trusted Zone. The first and secondary peer entities G,H are connected by a separate one-to-one interconnection that uses any protocol.

A device according to this embodiment of the invention may offer a bridging service by instantiating two peer entities that are interconnected by a one-to-one connection and have different (logical) addresses, i.e. UUIDs. Using a primary address, a peer joins a peer-group and publishes its bridging service within the peer-group. This peer-group may be an OwnerZone. In Fig.1, two OwnerZones OZ1,OZ2 are interconnected by a bridging device BR, which contains two peer entities G,H connected by an interconnection IN. The first OwnerZone OZ1 comprises the peers A,B,C,G, and the second OwnerZone OZ2 initially comprises the peers D,E,F. One of the peer entities of the bridging device BR is a primary peer entity G with a first address, and the other is a secondary peer entity H with a second address. If the bridging device BR is capable of running multithreaded software, it is possible to operate seamlessly within the two peer-groups in parallel by using the different peer entities G,H and their interconnection IN. Otherwise only one of the two peer entities G,H may be active at a time, so that data to be exchanged between them must be temporarily stored, e.g. in a dedicated shared memory within the bridging device BR.

According to the invention, the secondary peer entity H instantiates the other OwnerZone OZ2 and requests membership as a bridge peer, i.e. the second OwnerZone OZ2 may detect that it is a secondary peer entity of a bridging device. The peer entity H supplies its own peer credential together with the OwnerZone's OZ1 credential, which can be regarded as its "home" peer-group, or as the peer-group to which it tries to establish a link. At this point, the membership service of the other OwnerZone OZ2 checks if the peer entity H that tries to enter comes from a Trusted Zone. If this is the case, the membership service may accept the request and grant membership to the secondary peer H, which may e.g. have a kind of "guest" status.

The following list contains some possibilities to perform the Trusted Zone credibility check:
1. An Internet based server fosters a central Trusted Zone list, where relations between OwnerZones are documented, and OwnerZones are checking this list before granting Trusted Zone connection rights. Such list may e.g. be related to a specific topic, and maintained by an administrator.
2. An OwnerZone maintains its own Trusted Zone list and checks autonomously OwnerZone credibility. Also this list will usually be maintained by an administrator, or a user.
3. OwnerZones are contacting each other to check zones credibility.

In case of granted membership, the secondary bridging peer entity H joins the OwnerZone OZ2 with a so-called bridge identity and publishes its services within the OwnerZone OZ2. The secondary peer entity H also signals to the primary peer entity G the successful installation of the Trusted Zone connection. From this moment, the two peer entities G,H may communicate with each other and exchange messages, so that data can be exchanged between the two OwnerZones OZ1,OZ2 via the bridging service. There are extensions to standard JXTA messages necessary in order to achieve full end-to-end addressing and authentication. The sender information identifying the sending peer must be supplemented with the sending OwnerZone's credibility, and the addressee information identifying the receiving peer needs to be supplemented with the Trusted Zone address. The Trusted Zone address is needed to identify the OwnerZone the receiver belongs to. The credential identifies the sending OwnerZone, since the sending peer may be unknown within the addressees OwnerZone; only the bridge peer H, which forwards the message, is known in the addressees OwnerZone OZ2.

The second type of bridging service is a collaboration platform, as mentioned above. Fig.2 shows multiple OwnerZones OZ_A,...,OZ_D that are defined as Trusted Zones to a collaboration peer-group CPG, and may therefore communicate with it. Bridge peers of different OwnerZones may join the collaboration peer-group CPG that is intended for exchange of community messages, like Trusted Zone information, Electronic Program Guides (EPG) or community news like software updates etc. Following the above-mentioned mechanism, bridge peers use their secondary peer entity to collaborate with other bridge peers in such dedicated peer group. The architecture of a collaboration peer-group is mainly designed for broadcast type messages. Particularly, the collaboration peer-group CPG may comprise a rendezvous peer. The term rendezvous peer designates a peer that acts as a rendezvous point for discovering information about other peers, peer groups, services and pipes. Rendezvous peers may cache information that is useful to other peers. E.g. if the connected OwnerZones shall be independently addressable, it is most beneficial that the collaboration groups rendezvous peer implements a mapping table that shows the association between bridge peers and OwnerZones.

In a variation of the described method, the bridging peers can use the OwnerZone's universal unique identifier (UUID) as the secondary peer address. Thus, no mapping table is required. The secondary peer address can be identical with the OwnerZone address, since in systems like JXTA there is no way to mix them up: such systems may differ between peer information and peer-group information by using different advertisement message types. E.g. in Fig.1 the secondary peer H of the bridging device BR has a peer identifier that is identical with the identifier UUID_N of the home OwnerZone of its primary peer G. The peer-group identifier UUID_N may also be explicitly or implicitly contained within the peer identifier of the secondary peer H, so that the second OwnerZone can use the secondary peers identifier to determine the peer-group ID to which the primary peer G belongs.

### 2.) Trusted Zone Communication using Delegate Nodes

A second embodiment of the invention for performing Trusted Zone Communication is a Delegate Node, as mentioned above. This means that a peer offers a delegate service, which allows Trusted Zone connection. In contrast to the bridge service described before, only a single peer entity and a single address are needed. This means that the peer can be an active member of only one peer-group at a particular time, and may jump between different peer-groups.

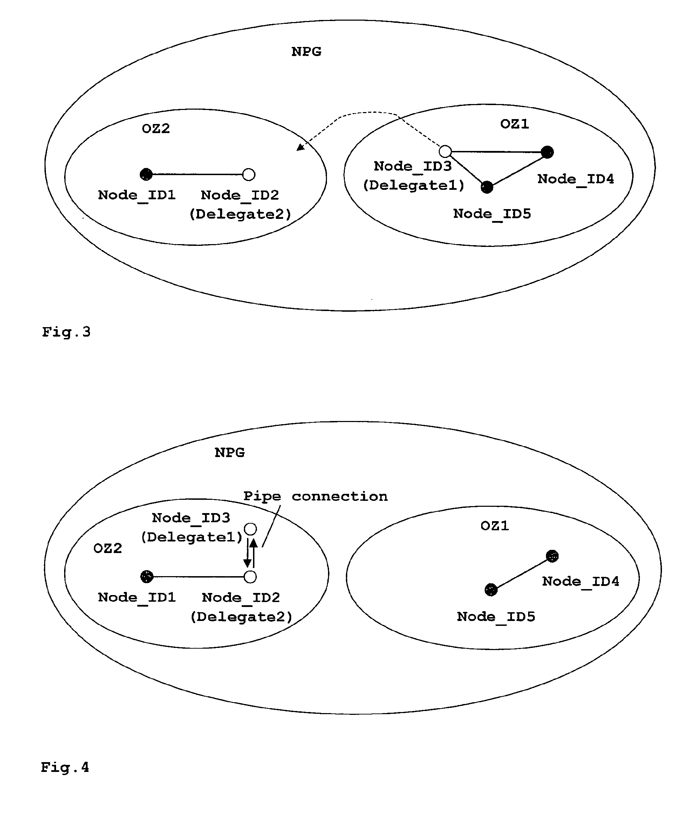

Figures 3-5 show the methodology of the delegate type of connection between two peer-groups OZ1, OZ2. The peer-groups have in this example a default parent peer-group NPG that is called NetPeerGroup, i.e. all peers Node_ID1,...,Node_ID5 of the peer-groups OZ1,OZ2 also belong to the common parent peer-group NPG by default. The difference however between such default parent peer-group NPG and other peer-groups is that peers may not freely communicate within the default peer-group, but only within their respective defined home peer-group OZ1, OZ2. Communication and data exchange within the default peer-group but outside the home peer-group is restricted to some basic type of messages. According to this embodiment of the invention however, delegate nodes can be used for this purpose. A delegate node can e.g. be appointed by a user or administrator, or can be automatically determined according to its features, e.g. special hardware connections or interfaces.

In the example, a first OwnerZone OZ1 wants to contact a second OwnerZone OZ2. Therefore, a delegate peer Node_ID3 of the first OwnerZone OZ1 gets the task from a connection service of its home peer-group to establish a Trusted Zone connection to that peer-group OZ2. The connection service provides a group identifier of the other peer-group OZ2 and/or a node identifier of the other group's delegate peer Node_ID2. Then, the delegate peer Node_ID3 leaves its home peer-group OZ1, as shown in Fig.3, and either contacts the other group's delegate peer Node_ID2 directly or switches to the parent peer-group NPG, depending on the information about the other peer-group OZ2 that the delegate peer Node_ID3 already has. Usually it will try to discover advertisements from the other peer-group OZ2.

When the delegate peer Node_ID3 has discovered the other peer-group OZ2, e.g. by receiving an advertisement message, it instantiates the peer-group OZ2 and asks for membership as a delegate node of its home peer-group OZ1. At this point the membership service of the new peer-group OZ1 performs a credential check, e.g. it checks if the delegate peer Node_ID3 comes from a Trusted Zone, i.e. if a Trusted Zone tries to enter the OwnerZone.

The following list contains three possibilities to perform the Trusted Zone credibility check:
1. A server within the Internet fosters a central trusted zone list, and peer-groups are checking this list before granting a Trusted Zone connection. Such list may e.g. be related to a specific topic like a particular soccer team, and maintained by an administrator.
2. Each peer-group may maintain its own Trusted Zone list.
3. Before accepting a delegate, the peer-groups contact each other to verify the connection request.

The peer-group credential is in this case more important for the Trusted Zone check than the peer credential. Before the membership service of the second peer-group OZ2 accepts the delegate peer Node_ID3 as a member, it needs to verify not only the peer's credential, but also the credential of the first peer-group OZ1, which either the delegate brings along or which is received from the first peer-group OZ1 upon request directly. If both credentials are verified, e.g. according to one of the above-listed credibility checks, the membership service may grant the delegate access to the group. Then the delegate peer Node_ID3 joins the group with a delegate status and identity. The peer-group is however free to restrict the delegate's rights within in zone, e.g. a delegate may access only defined contents. For different Trusted Zones, different contents may be defined.

A delegate Node_ID3 may e.g. be restricted to communicate only with the other groups delegate Node_ID2, as shown in Fig.4, which may have restricted access rights within its own peer-group OZ2. This is a secure way for the user of a peer-group to filter which data, e.g. multimedia contents, may be accessed by others.

Node and group identities can at any time be checked within a peer-group, because every message that a peer sends has a credential attached to it. The credential contains at least peer and peer-group identifiers. This allows identifying the sender, its role and its rights within the peer-group.

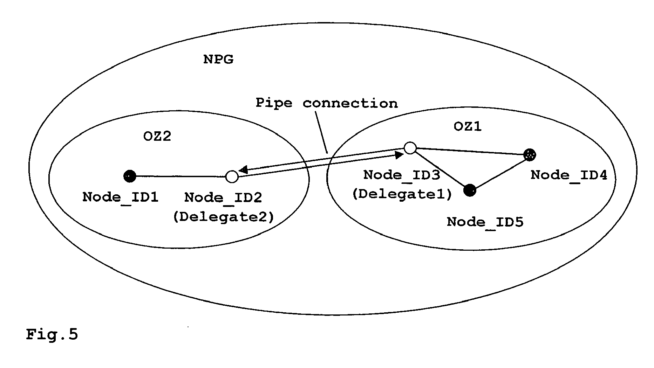

After the delegate Node_ID3 discovered an advertisement message of the second peer-group OZ2, which also contains a peer identifier of the second delegate Node_ID2, it offers a Trusted Zone connection, i.e. a pipe connection between the two delegates. The discovered delegate Node_ID2 may connect to the pipe and signal acceptance to the other delegate Node_ID3, which may thus recognize that the connection is established. In the next step of the connection process, shown in Fig.5, the delegate Node_ID3 returns to its home peer-group OZ1, but maintains the pipe connection to the other delegate Node_ID2. In its home peer-group OZ1, the returned delegate Node_ID3 announces the established Trusted Zone connection pipe, and from now on messages can be exchanged between the peer-groups OZ1,OZ2 via the delegate service. Messages can be sent to other peer-groups by using a special interface that may be implemented in the delegate service, wherein the identifiers of the receiving peer-group and the message are processed by the delegate peer and sent to the according pipe. I.e. a delegate may connect to a plurality of such pipes, where each pipe is a connection between only two peers. It is however necessary for data security reasons to supplement the message with the sending peer's peer-group credential and the receiving peer-groups address.

One embodiment of the invention uses secure connections, in JXTA also called "secure pipes", between the peer-groups.

In one embodiment it is possible that, instead of establishing a pipe connection with a Trusted Zone, the delegate Node_ID3 directly posts a message in the Trusted Zone OZ2. As a result, the delegate Node_ID3 retrieves response messages as a kind of "postman" and returns to its home peer-group OZ1.

In one embodiment of the invention an established pipe connection remains active for a determined time span or until a particular event occurs, e.g. until a single or a specific file or message is transferred, and is then terminated automatically. It needs to be reactivated later when another data transfer is required. Thus, a concise structure of the network and the relations between peer-groups can be maintained.

Advantageously, the invention offers a secure way to implement connections, e.g. for data or message exchange, between peer-groups that provide only very restricted access. Further, the user or administrator can define in a simple manner for his peer-group which other peer-group to cooperate with, and define certain cooperation levels or confidence levels, e.g. which data may be accessed by a particular peer-group. The delegate peer may mark these data as "borrowed" or "imported" before exporting them, in order to prevent copying or further distribution by the other peer-group. For this purpose e.g. metadata, digital signatures or electronic watermarking of the data can be used. A possibility for controlling propagation of data by using metadata is e.g. described in the European Patent Application EP1369804. Peers of the receiving peer-group may detect the marking, and upon detection of said marking may reject copying or further distribution of the data, e.g. messages.

The invention can be used for peer-groups in general, and in particular for peer-groups that use the JXTA protocol, and in more particular for peer-groups of the "OwnerZone" type as described in the European Patent application EP1427141.

## Claims

1. A method for establishing communication between a first and a second peer-group (OZ1,OZ2), including the steps of
- a first peer, the first peer being either a member (Node_ID3) of the first peer-group (OZ1) or being a secondary peer (H) relating to a primary peer (G), wherein the primary peer (G) is a member of the first peer-group (OZ1) and is related to the secondary peer (H) via a separate connection, sending a message to members of the second peer-group (OZ2);
- a second peer (Node_ID2) being a member of the second peer-group (OZ2) receiving said message and detecting from the message a peer identifier of the first peer (Node_ID3,H), a peer-group identifier (UUID_N) of the first peer-group (OZ1), an application for a temporary group membership of the first peer (Node_ID3,H) in the second peer-group (OZ2), and an indication that the first peer (Node_ID3,H) intends to build up a connection to the first peer-group (OZ1);
- detecting whether for the second peer-group (OZ2) a connection to the first peer-group (OZ1) is allowed; and
- if such connection is allowed, granting the first peer (Node_ID3,H) membership with the second peer-group (OZ2), wherein the first peer (Node_ID3,H) is allowed to send data or messages and/or provide services from the second peer-group (OZ2) to the first peer-group (OZ1).

2. Method according to claim 1, wherein the close relationship between the first peer and the other peer comprises that both peers are software instances or threads running on the same hardware.

3. Method according to claim 1 or 2, wherein the close relationship between the first peer and the other peer comprises that they use a secret protocol or encryption that is not known to other peers.

4. Method according to any of claims 1-3, wherein the first peer (Node_ID3,H) is also allowed to receive data or messages and/or request services from the first peer-group (OZ1) and provide them to the second peer-group (OZ2).

5. Method according to claim 4, wherein data or messages and/or service requests provided to the second peer-group (OZ2,CPG) are broadcast at least to all peers within said second peer-group (OZ2,CPG) that hold a connection to other peer-groups (OZ_A,...,OZ_D).

6. Method according to any of claims 1-5, wherein the data and services in the second peer-group (OZ2) are classified, and wherein said detecting if for the second peer-group (OZ2) a connection to the first peer-group (OZ1) is allowed comprises detecting a confidence level relating to the first peer-group (OZ1), the confidence level determining which particular data and services of the second peer-group (OZ2) may be provided to the first peer-group (OZ1).

7. Method according to claim 6, wherein said detecting a confidence level relating to the first peer-group (OZ1) comprises checking a central list provided by an Internet based server or checking a local list.

8. Method according to claim 6, wherein said detecting a confidence level relating to the first peer-group (OZ1) comprises the second peer-group (OZ2) contacting said first peer-group (OZ1) for confirmation.

9. Method according to any of the preceding claims, wherein said connection granting the first peer (Node_ID3,H) membership with the second peer-group (OZ2) is automatically terminated after a predetermined time or upon a predetermined event.

10. Method according to any of the preceding claims, wherein data or messages sent from the second peer-group (OZ2) to the first peer-group (OZ1) are marked, and wherein peers of the first peer-group (OZ1) may detect said marking and upon detection of said marking reject copying or further distribution of the data or messages.

11. Method according to claim 1, wherein the first peer is a secondary peer (H) relating to a primary peer (G), and wherein peers and peer-groups have individual identifiers, and wherein the identifier of the secondary peer (H) equals the peer-group identifier of the first peer-group (OZ1).
